# EUROPÄISCHE PATENTSCHRIFT

(11) **EP 1 508 463 B1**
(45) Veröffentlichungstag und Bekanntmachung des Hinweises auf die Patenterteilung: **14.05.2008**
(21) Anmeldenummer: 03102595.0
(22) Anmeldetag: 19.08.2003
(51) Int. Cl.: B60J 5/04, B60J 7/10, B60J 7/11

(54) **Dachflügeltür**
Roof wing door
Panneau pivotant de toit

(43) Veröffentlichungstag der Anmeldung: 23.02.2005
(73) Patentinhaber: Ford Global Technologies, LLC, A subsidary of Ford Motor Company, Dearborn, MI 48126 (US)
(72) Erfinder: Matheis, Anton, 51467 Bergisch Gladbach (DE); Benderoth, Thomas, 51545 Waldbroel (DE); Spahl, Robert, 51109 Koeln (DE)
(74) Vertreter: Drömer, Hans-Carsten

(56) Entgegenhaltungen:
- US-A- 3 622 197
- US-A1- 2002 079 719
- PATENT ABSTRACTS OF JAPAN vol. 011, no. 301 (M-628), 30. September 1987 (1987-09-30) -& JP 62 091316 A (MAZDA MOTOR CORP), 25. April 1987 (1987-04-25)
- PATENT ABSTRACTS OF JAPAN vol. 010, no. 385 (M-548), 24. Dezember 1986 (1986-12-24) & JP 61 175119 A (YUKIO KAWAKAMI), 6. August 1986 (1986-08-06)

## Beschreibung

Die Erfindung betrifft eine Dachflügeltür für ein Kraftfahrzeug, umfassend zwei Türelemente, nämlich eine Seitentür sowie einen daran angrenzenden aufschwingbaren Dachflügel, der in einem Fahrzeugdach angeordnet ist, wobei wenigstens ein Scharnier vorgesehen ist, über das der Dachflügel schwingbar an dem Fahrzeugdach angebracht ist.

Eine gattungsgemäße Dachflügeltür ist aus der US 2,857,198 bekannt. Sie umfasst eine konventionelle Seitentür mit Fensterrahmen sowie einen Dachflügel, der um eine in Längsrichtung des Fahrzeugs angeordnete Achse aus der Dachfläche des Fahrzeugs aufschwingbar ist. Die Dachflügeltür ist geöffnet, wenn sowohl die Seitentür geöffnet als auch der Dachflügel hochgeklappt ist. In dieser Stellung vereinfacht die bekannte Konstruktion das Ein- und Aussteigen in das Fahrzeug, weil sich der Fahrgast nicht beugen muss, um an einer Dachkante vorbei auf einen Fahrzeugsitz zu gelangen. Es wird als Nachteil der bekannten aufwendigen Dachflügeltür angesehen, dass sich außer für den Ein- und Ausstieg kein zusätzlicher Nutzen für die Verwendung des Kraftfahrzeugs ergibt.

Der Erfindung liegt die Aufgabe zugrunde, eine Dachflügeltür so weiterzubilden, dass sich für ein damit ausgerüstetes Kraftfahrzeug weitere Nutzungsmöglichkeiten ergeben, wobei die Dachflügeltür stets einfach handhabbar sein soll.

Erfindungsgemäß wird die Aufgabe dadurch gelöst, dass eine Arretiervorrichtung vorgesehen ist, mit der der Dachflügel lösbar an dem Scharnier angebracht ist.

Die Karosserie eines Kraftfahrzeugs ist mit der erfindungsgemäßen Dachflügeltür variabel geworden. Das Kraftfahrzeug kann wahlweise mit geschlossener Karosserie oder mit geöffneter Karosserie betrieben werden. Grundsätzlich sind Karosserien eines Kraftfahrzeugs entweder geschlossen oder besitzen die Möglichkeit bereichsweise geöffnet zu werden, indem Karosserieteile faltbar, klappbar oder entfernbar sind. Bei der oben erwähnten Karosserie gemäß der US 2,857,198 handelt es sich um eine geschlossene Karosserie mit Dachflügeltüren, zur Variabilität der Karosserie leistet die bekannte Dachflügeltür keinerlei Beitrag. Demgegenüber gestattet die erfindungsgemäße Dachflügeltür mit Arretiervorrichtung, den Dachflügel zu entfernen und das Kraftfahrzeug mit geöffnetem Dach zu benutzen; je nach Größe des Dachflügels kann der Fahreindruck dem eines Kabrioletts nahe kommen.

An sich sind auch solche Dachflügeltüren bekannt, siehe z.B. die US 2002/0079719 A1 oder die JP 62-091316.

Selbstverständlich kann ein Kraftfahrzeug sowohl auf der Fahrer- als auch auf der Beifahrerseite mit Dachflügeltüren ausgestattet sein. Ein Kraftfahrzeug mit derartiger Türkonstruktion kann als zweitüriges oder beispielsweise auch als viertüriges Kraftfahrzeug ausgeführt sein.

Als Scharnier im Sinne der Erfindung werden nebst Scharnieren, die um eine Achse drehbar sind, auch Koppelvorrichtungen verstanden, über die ein Dachflügel auf einer Bahn schwingbar ist, die von einer Kreisbahn abweicht. Bevorzugt liegt die Achse eines Drehscharniers beziehungsweise liegen die Achsen einer Koppelvorrichtung in Längsrichtung des Kraftfahrzeugs.

Zweckmäßig weist die Arretiervorrichtung einen unmittelbar an dem Dachflügel vorgesehenen Handverschluss zum Lösen und Fixieren der Verbindung zwischen Scharnier und Dachflügel auf. Dadurch ist die Konstruktion besonders einfach. Der Bediener kann durch Betätigung des Handverschlusses den Dachflügel sehr schnell abnehmen oder anbringen. Letzteres gewährt ein rasches Schließen des Fahrzeugdachs, beispielsweise bei aufkommenden Regen.

Bei einer weitere Ausführungsform der Dachflügeltür weist die Arretiervorrichtung anstelle eines Handverschlusses einen schaltbaren Automatikverschluss zum Lösen und Fixieren der Verbindung zwischen Scharnier und Dachflügel auf. Eine manuelle Betätigung zum Entfernen oder Anbringen des Dachflügels entfällt für den Bediener. Durch eine Schaltung des Automatikverschlusses zwecks Lösen der Verbindung kann der Dachflügel sofort aus dem Fahrzeugdach abgezogen werden. Zum Fixieren wird der Dachflügel einfach in eine vorgegebene Position im Fahrzeugdach eingelegt und der Automatikverschluss geschaltet. Um den Automatikverschluss zu aktivieren, ist im Fahrgastraum des Kraftfahrzeugs ein entsprechendes Betätigungselement angeordnet.

Eine dritte Ausführungsform weist eine Arretiervorrichtung auf, die sowohl mit einem Handverschluss als auch mit einem schaltbaren Automatikverschluss zum Lösen und Fixieren der Verbindung zwischen Scharnier und Dachflügel versehen ist. Der Dachflügel kann wahlweise auf die eine oder andere Art gelöst beziehungsweise fixiert werden. Die Handhabung ist mit dem Automatikverschluss komfortabel. Üblicherweise wird der Dachflügel per Automatikverschluss geschaltet. Wegen des Handverschlusses ist die Handhabung darüber hinaus sicher, weil bei Betriebsstörungen des Automatikverschlusses die Funktion der Arretiervorrichtung durch den Handverschluss gewährleistet ist.

Bevorzugt weist der Automatikverschluss ein Arretierelement sowie eine Antriebseinrichtung für das Arretierelement auf, wobei das Arretierelement und die Antriebseinrichtung im geöffneten Zustand des Dachflügels voneinander gelöst sind. Die Trennung zwischen Arretierelement und Antriebseinrichtung vermeidet, dass die Massen der Teile der Antriebseinrichtung beim Öffnen des Dachflügels mitgeschwungen werden müssen. Die Konstruktion vereinfacht sich auf diese Weise und spart Gewicht für den Dachflügel und Antriebsleistung für einen Schwingantrieb. Letzterer kann dadurch ebenfalls kleiner und leichter dimensioniert werden.

Günstig ist es, wenn das Arretierelement sowohl im montierten Zustand als auch im gelösten Zustand des Dachflügels an dem Scharnier angeordnet und mit diesem schwingbar ist. Durch Öffnen des Dachflügels wird das Arretierelement von der zugeordneten Antriebseinrichtung gelöst, sodass der Dachflügel ohne weitere Anbauteile aufgeschwungen werden kann.

Günstig ist das Arretierelement des Automatikverschlusses durch eine Drehbewegung betätigbar. Durch eine Drehung ist eine Arretierung besonders platzsparend möglich. Durch den drehenden Antrieb kann das Arretierelement eine Schraubbewegung durchführen, wobei Dachflügel und Scharnier gegeneinander verspannt werden. Alternativ kann das Arretierelement nach Art eines Bajonettverschlusses ausgebildet sein, bei dem Rastelemente die Verbindung zwischen Dachflügel und Scharnier sichern.

Hilfreich ist es, wenn der Automatikverschluss eine Kupplungseinrichtung aufweist, über die das Arretierelement mit der Antriebseinrichtung kuppelbar ist. Über die Kupplungseinrichtung wird die Trennung zwischen Arretierelement und dessen Antriebseinrichtung vorgenommen.

Zweckmäßig weist die Kupplungseinrichtung zwei Kupplungsteile auf, die aufeinander zu- und voneinander wegbewegbar sind, wobei die Kupplungsteile durch eine Bewegung aufeinander zu einkuppelbar sind. Vorteilhaft ist ein Kupplungsteil als Drehadapter und das zweite Kupplungsteil als Mitnahmestück ausgebildet ist, wobei der Drehadapter relativ zu dem Fahrzeugdach stationär angeordnet ist und das Mitnahmestück drehfest an dem Arretierelement angeordnet und mit diesem schwingbar ist.

Durch ein Herabschwingen des Dachflügels aus einer hochgeklappten Position wird das mit dem Mitnahmestück versehene Arretierelement an dem Scharnier lagernd auf den stationär in dem Fahrzeugdach angeordneten Drehadapter geklappt und in diesem eingekuppelt. Nur in dieser geschlossenen Position des Dachflügels kann die Arretiervorrichtung betätigt werden, um den Dachflügel von dem Scharnier zu lösen oder an dem Scharnier zu fixieren. Im gelösten Zustand kann der Dachflügel dann aus der Dachfläche herausgezogen werden, um ihn zu entfernen. Umgekehrt wird der Dachflügel einfach in die Dachfläche eingeschoben, um ihn an dem Scharnier zu fixieren und die Dachfläche zu schließen.

Vereinfacht wird die Handhabung dadurch, dass der Drehadapter und das Mitnahmestück durch Öffnen und Schließen des Dachflügels ein- und auskuppelbar sind, wobei die Kupplungseinrichtung im geschlossenen Zustand des Dachflügels eingekuppelt und im geöffneten Zustand des Dachflügels ausgekuppelt ist. Zum Ein- und Auskuppeln macht sich die Konstruktion die Schwingbewegung des Dachflügels zu nutze, sodass der Kupplungsvorgang nahezu selbsttätig geschieht.

Vorzugsweise wirken der Drehadapter und das Mitnahmestück der Kupplungseinrichtung formschlüssig zusammen. Zum Einkuppeln sind Drehadapter und Mitnahmestück relativ zueinander in einer übereinstimmenden Drehposition zueinander. Der Formschluss wird durch die Schwingbewegung des Dachflügels hergestellt beziehungsweise beseitigt.

Günstigerweise ist der Drehadapter mit einem Drehantrieb versehen. Der Drehantrieb ist Bestandteil des Automatikverschlusses und wird über ein Betätigungselement geschaltet.

Da in einem Fahrzeugdach enge Platzverhältnisse herrschen und im Bereich des Scharniers kein Antrieb mit großem Platzbedarf gewünscht wird, ist vorgesehen, dass der Drehantrieb ein Zugmittel aufweist. Das Zugmittel ist mit dem Drehadapter verbunden und versetzt diesen in eine vor- oder zurückdrehende Arretierbewegung. Der Drehadapter bildet somit die Abtriebseite eines Zugmittelgetriebes. Die Antriebsseite des Zugmittelgetriebes mit Antriebsmotor ist an einer geeignete Stelle im Fahrzeugdach angeordnet, die genügend Platz zur Unterbringung aufweist.

Üblicherweise sind auf der Fahrer- sowie der Beifahrerseite eines Kraftfahrzeugs Dachflügeltüren angeordnet, wobei zwischen den Dachflügeln ein in Längsrichtung des Fahrzeugs verlaufender Dachsteg des Fahrzeugdachs verbleibt. Im Bereich dieses Dachstegs sind die benötigten Antriebseinrichtungen für den Automatikverschluss angeordnet.

Die Handhabung der Dachflügeltür lässt sich weiter verbessern, wenn ein Schwingantrieb für den Dachflügel vorgesehen ist. Der Schwingantrieb ist für das Hoch- und Herunterklappen des Dachflügels erforderlich. Er ist zweckmäßig ebenfalls in dem Dachsteg des Fahrzeugdachs angeordnet.

Für den Dachflügel wird geringes Gewicht angestrebt. Aus diesem Grund ist der Schwingantrieb bevorzugt außerhalb des Dachflügels in dem Fahrzeugdach angeordnet.

Vorteilhaft ist der Schwingantrieb für den Dachflügel als elektromechanischer Schwingantrieb ausgebildet.

Damit keine Bauteile des Schwingantriebs in die Dachöffnung ragen, ist der Schwingantrieb an das Scharnier gekoppelt.

Der Nutzen eines Kraftfahrzeugs, das mit einer erfindungsgemäßen Dachflügeltür ausgestattet ist, kann weiter verbessert werden, wenn die Seitentür als rahmenlose Tür ausgebildet ist. Bei entferntem Dachflügel und heruntergelassener Seitenscheibe der Seitentür ergibt sich ein offenes Fahrgefühl, das dem eines Kabrioletts nahe kommt. Lediglich der schmale Dachsteg beschneidet die Offenheit der Karosserie. Es besteht Freiheit zur Seite hin sowie zu dem offenen Dach.

Eine weitere vorteilhafte Ausgestaltung der Erfindung sieht vor, daß der Dachflügel automatisch mittels der Arretiervorrichtung am Scharnier arretiert wird, nachdem er sich eine vorgegebene Zeit in der dafür vorgesehenen Position befindet. Mittels eines geeigneten Sensors oder Schalters wird die vorgesehene Einbauposition des Dachflügels im Scharnier erfaßt. Verbleibt der Dachflügel gegenüber dem Scharnier eine gewisse Zeit in dieser Position, wird der Dachflügel automatisch am Scharnier arretiert, indem die Arretiervorrichtung durch eine geeignete Steuervorrichtung angesteuert wird. Eine bevorzugte Zeitdauer ist, wenn der Flügel länger als 1 Sekunde in dieser Position befindet. Vorteil ist für den Benutzer, daß er lediglich den Dachflügel in die vorgesehene Position bringt und dieser dann selbsttätig arretiert wird, ohne daß der Benutzer die Arretiervorrichtung betätigen muß.

Nachstehend ist die Erfindung in einer Zeichnung beispielhaft dargestellt und anhand der einzelnen Figuren detailliert beschrieben. Es zeigen:
- Fig. 1: ein Kraftfahrzeug mit Dachflügeltüren auf Fahrer- sowie Beifahrerseite; die Dachflügeltür der Fahrerseite in geöffnetem Zustand,
- Fig. 2: eine schematische Darstellung mit einem Ausschnitt eines Dachflügels sowie einem Schwingantrieb und einer Arretiervorrichtung mit schaltbarem Automatikverschluss,
- Fig. 3: eine ausschnittsweise Darstellung eines Dachflügels im geöffneten Zustand mit hochgeklapptem Scharnier sowie Schwingantrieb und Arretiervorrichtung mit Automatikverschluss,
- Fig. 4: eine Detailansicht einer Kupplungseinrichtung des Automatikverschlusses der Arretiervorrichtung,
- Fig. 5: eine Detailansicht auf eine alternative Ausführungsform einer Drehflügeltür mit Automatikverschluss und zusätzlichem Handverschluss.

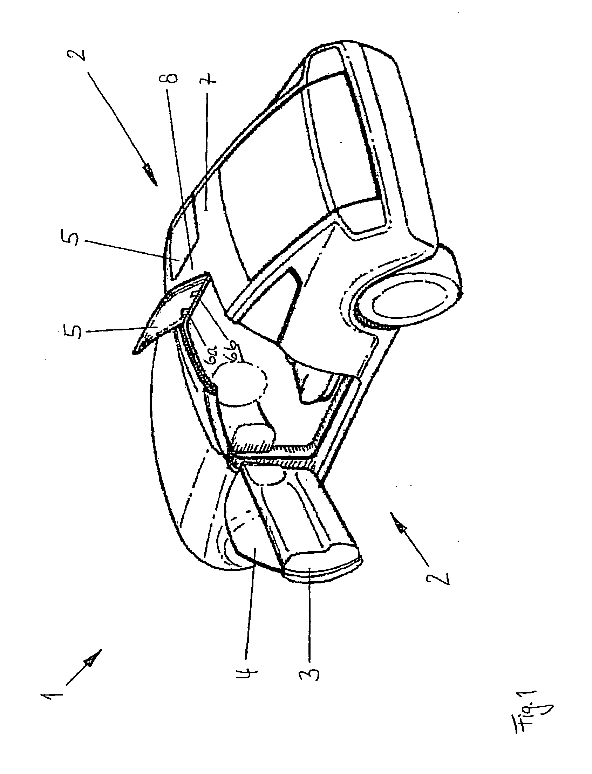

In Fig. 1 ist ein zweitüriges Kraftfahrzeug 1 schematisch dargestellt. Sowohl auf der Fahrer- als auch auf der Beifahrerseite des Kraftfahrzeugs 1 ist je eine Dachflügeltür 2 vorgesehen. Die Dachflügeltür 2 auf der Fahrerseite ist im geöffneten Zustand gezeigt. Sie umfasst eine Seitentür 3 mit rahmenloser Seitenscheibe 4 sowie einen Dachflügel 5. Die Seitentür 3 ist in Fahrtrichtung vorne an der Fahrzeugkarosserie angelenkt. Der Dachflügel 5 ist um eine etwa in Längsrichtung des Kraftfahrzeugs 1 liegende Achse aus der Dachfläche des Fahrzeugdachs 7 hochgeklappt. Die Dachflügeltür der Beifahrerseite weist eine spiegelbildliche Konstruktion auf. Sie ist geschlossen dargestellt. Jeder Dachflügel 5 ist über zwei Scharniere 6a und 6b schwingbar an dem Fahrzeugdach 7 angebracht. Es ist jeweils eine Arretiervorrichtung vorgesehen (hier nicht sichtbar), mit der der Dachflügel 5 von den Scharnieren 6a und 6b lösbar ist. Für eine offene Fahrt wird der abgenommene Dachflügel 5 beispielsweise im Kofferraum des Kraftfahrzeug mitgeführt. Ebenfalls über die Arretiervorrichtung lässt sich der Dachflügel 5 jederzeit wieder an den Scharnieren 6a und 6b fixieren. Mit entfernten Dachflügeln 5 sowie herabgelassenen Seitenscheiben 4 der Seitentüren 3 erhalten die Insassen Freiheit zur Seite und nach oben und ein ähnliches Fahrgefühl wie in einem Kabriolett.

Zwischen den beiden Dachflügeln 5 ist ein Dachsteg 8 vorhanden, in dem Teile der Arretiervorrichtung sowie Teile eines Schwingantriebs für die beiden Dachflügel 5 angeordnet sind.

Die Dachflügel 5 lassen sich im heruntergeklappten, geschlossenen Zustand des Fahrzeugsdaches 7 entfernen. Die Konstruktion ist so ausgelegt, dass ein Lösen der Arretiervorrichtung nur in der geschlossenen Position der Dachflügel 5 möglich ist. Hierin liegt ein Vorteil der vorgeschlagenen Dachflügeltür 2, weil nahezu keine Bauteile der Arretiervorrichtung beim Betätigen eines Dachflügels 5 mit auf- und abschwingen müssen.

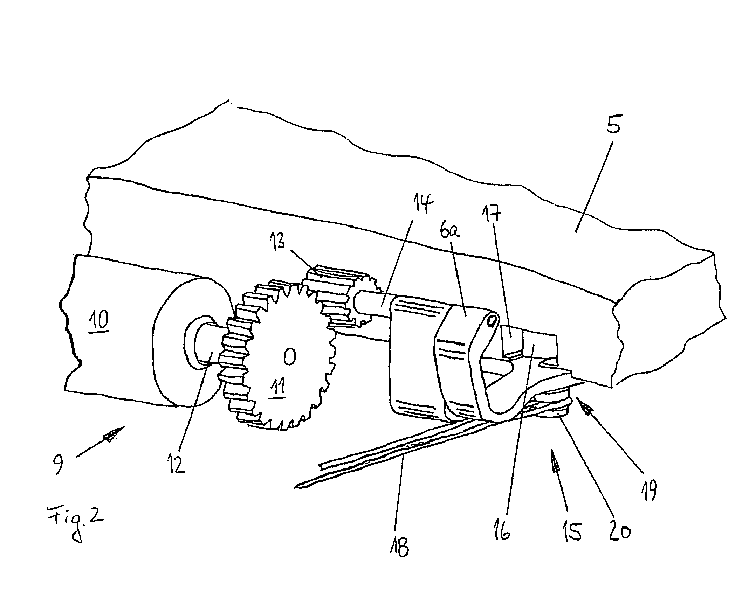

In Fig. 2 ist der Dachflügel 5 gemäß Fig. 1 ausschnittsweise dargestellt. Es ist die Rückseite des Scharniers 6a gezeigt, mit dem der Dachflügel 5 an dem Fahrzeugdach 7 angelenkt ist. In der gezeigten Position des Scharniers 6a ist der Dachflügel 5 heruntergeklappt und das Fahrzeugdach 7 geschlossen. Die dargestellten mechanischen Bauteile befinden sich im Bereich des Dachstegs 8 des Fahrzeugdachs 7. Zu erkennen ist ein Schwingantrieb 9, mit dem das Scharnier 6a auf- und zuklappbar ist. Das Scharnier 6b kann ebenfalls mit einem Schwingantrieb versehen sein. Der Schwingantrieb 9 weist im Wesentlichen einen Antriebsmotor 10 mit einem Antriebsritzel 11 auf einer Motorwelle 12 des Antriebsmotors 10 auf sowie ein Abtriebsritzel 13 auf einer Antriebswelle 14 für das Scharnier 6a. Das Abtriebsritzel 13 mit kleinem Durchmesser ist drehfest an einem Wellenende der Antriebswelle 14 aufgenommen. Das Scharnier 6a ist an dem gegenüberliegenden Ende der Antriebswelle 14 drehfest angebracht. Im vorliegenden Fall bewirken die Ritzel 11 und 13 eine Übersetzung ins Schnelle, da das Antriebsritzel 11 auf der Motorwelle 12 einen größeren Durchmesser aufweist als das Abtriebsritzel 13, das mit dem Scharnier 6a auf einer Welle angeordnet ist.

Zur lösbaren Verbindung zwischen Dachflügel 5 und Scharnier 6a ist eine Arretiervorrichtung 15 mit einem Automatikverschluss vorgesehen. Die Arretiervorrichtung 15 beziehungsweise der Automatikverschluss weist ein Arretierelement 16 auf. Nach Fig. 2 ist das Arretierelement 16 in einer Aufnahmeöffnung 17 des Dachflügels 5 angeordnet. Zur Betätigung des Arretierelements 16, beispielsweise zwecks Lösen der Verbindung zwischen Dachflügel 5 und Scharnier 6a, muss das Arretierelement 16 gedreht werden. Eine Drehung des Arretierelements 16 ist nur in geschlossener Ste I-lung des Dachflügels 5 vorgesehen. Auf diese Weise bleibt es erspart, Bauteile der Arretiervorrichtung 15 in den Dachflügel 5 einbauen zu müssen, deren Masse während einer Schwingbewegung des Dachflügels 5 stets mit bewegt werden müsste.

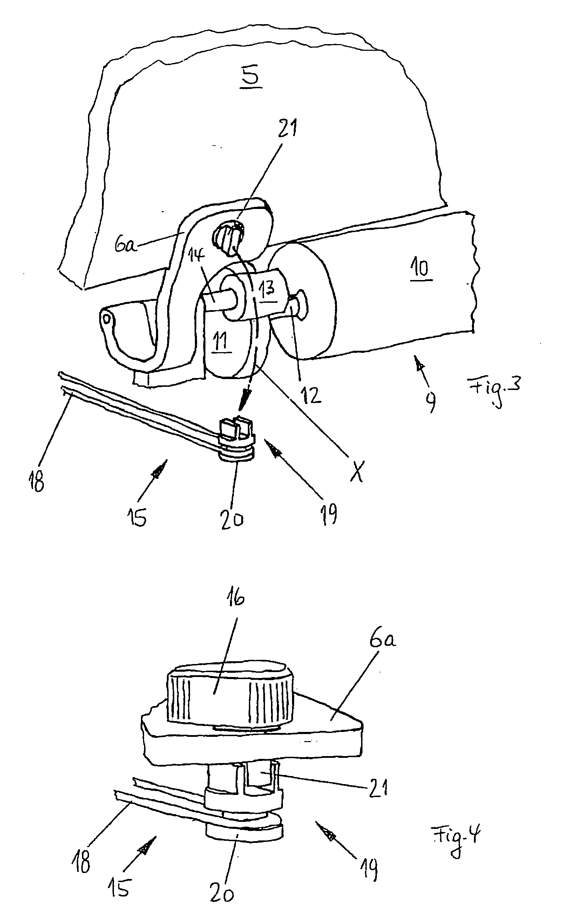

Auf der dem Dachflügel 5 abgewandten Seite des Scharniers 6a ist ausschnittsweise ein Drehantrieb mit einem Zugriemen 18 dargestellt. Der Zugriemen 18 ist an einem Kupplungsteil umgelenkt, das nachfolgend anhand der Fig. 3 näher erläutert wird. Das Kupplungsteil befindet sich unmittelbar in der Nähe des Scharniers 6a, und zwar dem Arretierelement 16 gegenüberliegend. Das Scharnier 6a befindet sich somit zwischen dem Arretierelement 16 und dem Kupplungsteil.

Fig. 3 zeigt den Dachflügel 5 gemäß Fig. 2 aus einer anderen Perspektive sowie im hochgeklappten Zustand. In dieser Perspektive ist die Vorderseite des Scharniers 6a zu sehen. Das Arretierelement 16 in dem Dachflügel 5 ist in dieser Perspektive nicht sichtbar. Anhand der Fig. 3 soll eine Kupplungseinrichtung 19 erläutert werden, die Teil der Arretiervorrichtung 15 beziehungsweise des Automatikverschlusses ist. Die Kupplungseinrichtung 19 weist zwei Kupplungsteile auf, nämlich das oben erwähnte Kupplungsteil mit Zugriemen 18 sowie ein zweites Kupplungsteil, das mit dem Arretierelement 16 fest verbunden ist und gemäß Fig. 3 auf der dem Arretierelement 16 abgewandten Seite aus dem Scharnier 6a heraus ragt. Das Kupplungsteil mit Zugriemen 18 ist als Drehadapter 20 ausgebildet und relativ zu dem Fahrzeugdach 7 stationär angeordnet. Das an dem Scharnier 6a vorgesehene Kupplungsteil ist als Mitnahmestück 21 an dem Arretierelement 16 ausgebildet und in dem Scharnier drehbar gelagert. Das Mitnahmestück lässt sich durch eine den Dachflügel 5 schließende Schwingbewegung in Richtung des gestrichelten Pfeils X in den Drehadapter 20 einkuppeln. Die eingekuppelte Position ist am besten in der vergrößerten Ansicht gemäß Fig. 4 erkennbar. Im Übrigen zeigt auch Fig. 2 die eingekuppelte Position, wobei in Fig. 2 lediglich der Drehadapter 20 sichtbar ist, jedoch das eingekuppelte Mitnahmestück 21 verdeckt ist. Das Mitnahmestück 21 passt gemäß Fig. 4 im heruntergeklappten Zustand des Scharnier 6a formschlüssig in den Drehadapter 20 hinein.

Zum Lösen des Dachflügels 5 von dem Scharnier 6a beziehungsweise Fixieren des Dachflügels 5 an dem Scharnier 6a muss das Arretierelement 16 gedreht werden. Die Drehbewegung wird über den Drehantrieb mit dem Zugriemen 18, den Drehadapter 20 und das Mitnahmestück 21 eingeleitet. Der Zugriemen 18 ist in den Figuren 2, 3, und 4 dargestellt. In dem Bereich des Drehadapters 20 würde eine Antriebseinrichtung mit großem Raumbedarf die Kopffreiheit der Fahrzeuginsassen behindern. Aus diesem Grund ist der Antrieb für den Drehadapter 20 an eine andere Stelle im Fahrzeugdach 7 verlagert und wird mit Hilfe des Zugriemens 18 platzsparend zu dem Drehadapter 20 übertragen. Zwecks Betätigung des Arretierelements 16 wird der Zugriemen 18 in Bewegung gesetzt und der Drehadapter 20 gedreht. Der Drehadapter 20 dreht das Mitnahmestück 21 und somit das Arretierelement 16. Durch die Bewegung des Arretierelements 16 in eine Drehrichtung wird der Dachfl ügel 5 von dem Scharnier 6a gelöst und durch eine Bewegung des Arretierelements 16 in der entgegengesetzten Drehrichtung wird der Dachflügel 5 an dem Scharnier 6a fixiert.

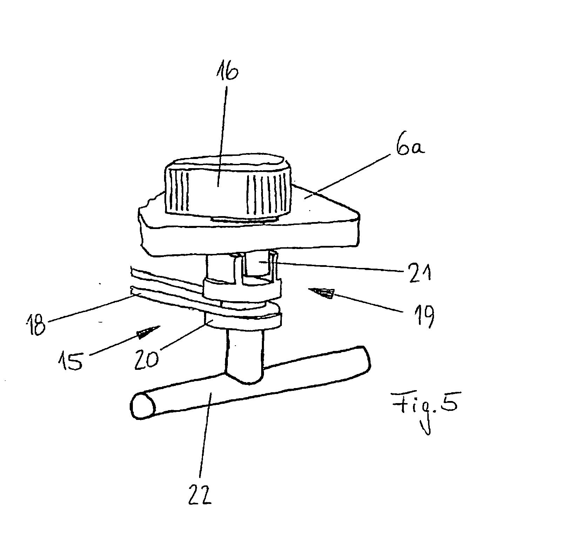

Eine alternative Ausführungsform einer Dachflügeltür ist in Fig. 5 dargestellt. Der Aufbau und die Funktion entsprechen der Ausführung, die anhand der Figuren 2, 3 und 4 erläutert worden ist. Für gleiche Bauteile sind die gleichen Bezugszeichen angegeben, wie in Fig. 4. Die Arretiervorrichtung 15 ist zusätzlich zu dem Automatikverschluss mit einem Handverschluss 22 versehen. Der Automatikverschluss weist einen Drehantrieb mit Zugriemen 18 für einen Drehadapter 20 auf. Der Drehadapter 20 kann unabhängig davon wahlweise über den zusätzlichen Handverschluss 22 direkt betätigt werden.

### BEZUGSZEICHENLISTE

- 1: Kraftfahrzeug
- 2: Dachflügeltür
- 3: Seitentür
- 4: Seitenscheibe
- 5: Dachflügel
- 6a: Scharnier
- 6b: Scharnier
- 7: Fahrzeugdach
- 8: Dachsteg
- 9: Schwingantrieb
- 10: Antriebsmotor
- 11: Antriebsritzel
- 12: Motorwelle
- 13: Abtriebsritzel
- 14: Antriebswelle
- 15: Arretiervorrichtung
- 16: Arretierelement
- 17: Aufnahmeöffnung
- 18: Zugriemen
- 19: Kupplungseinrichtung
- 20: Drehadapter
- 21: Mitnahmestück
- 22: Handverschluss
- X: Pfeil

## Patentansprüche

1. Dachflügeltür (2) für ein Kraftfahrzeug (1), umfassend zwei Türelemente, nämlich eine Seitentür (3) sowie einen daran angrenzenden aufschwingbaren Dachflügel (5), der in einem Fahrzeugdach (7) angeordnet ist, wobei wenigstens ein Scharnier (6a, 6b) vorgesehen ist, über das der Dachflügel (5) schwingbar an dem Fahrzeugdach (7) angebracht ist,
**dadurch gekennzeichnet, dass**
eine Arretiervorrichtung (15) vorgesehen ist, mit der der Dachflügel (5) lösbar an dem Scharnier (6a, 6b) angebracht ist.

2. Dachflügeltür nach Anspruch 1,
**dadurch gekennzeichnet, dass**
die Arretiervorrichtung (15) einen unmittelbar an dem Dachflügel (5) vorgesehenen Handverschluss (22) zum Lösen und Fixieren der Verbindung zwischen Scharnier (6a, 6b) und Dachflügel (5) aufweist.

3. Dachflügeltür nach Anspruch 1 oder 2,
**dadurch gekennzeichnet, dass**
die Arretiervorrichtung (15) einen schaltbaren Automatikverschluss zum Lösen und Fixieren der Verbindung zwischen Scharnier (6a, 6b) und Dachflügel (5) aufweist.

4. Dachflügeltür nach Anspruch 3,
**dadurch gekennzeichnet, dass**
der Automatikverschluss ein Arretierelement (16) sowie eine Antriebseinrichtung für das Arretierelement (16) aufweist, wobei das Arretierelement (16) und die Antriebseinrichtung im geöffneten Zustand des Dachflügels (5) voneinander gelöst sind.

5. Dachflügeltür nach Anspruch 4,
**dadurch gekennzeichnet, dass**
das Arretierelement sowohl im montierten Zustand als auch im gelösten Zustand des Dachflügels (5) an dem Scharnier (6a, 6b) angeordnet und mit diesem schwingbar ist.

6. Dachflügeltür nach einem der Ansprüche 3 bis 5,
**dadurch gekennzeichnet, dass**
das Arretierelement (16) des Automatikverschlusses durch eine Drehbewegung betätigbar ist.

7. Dachflügeltür nach einem der Ansprüche 4 bis 6,
**dadurch gekennzeichnet, dass**
der Automatikverschluss eine Kupplungseinrichtung (19) aufweist, über die das Arretierelement (16) mit der Antriebseinrichtung kuppelbar ist.

8. Dachflügeltür nach Anspruch 7,
**dadurch gekennzeichnet, dass**
die Kupplungseinrichtung (19) zwei Kupplungsteile aufweist, die aufeinander zu- und voneinander wegbewegbar sind, wobei die Kupplungsteile durch eine Bewegung aufeinander zu einkuppelbar sind.

9. Dachflügeltür nach Anspruch 8,
**dadurch gekennzeichnet, dass**
ein Kupplungsteil als Drehadapter (20) und das zweite Kupplungsteil als Mitnahmestück (21) ausgebildet ist, wobei der Drehadapter (20) relativ zum Fahrzeugdach (7) stationär angeordnet ist und das Mitnahmestück (21) drehfest an dem Arretierelement (16) angeordnet und mit diesem schwingbar ist.

10. Dachflügeltür nach Anspruch 9,
**dadurch gekennzeichnet, dass**
der Drehadapter (20) und das Mitnahmestück (21) durch Öffnen und Schließen des Dachflügels (5) ein- und auskuppelbar sind, wobei die Kupplungseinrichtung (19) im geschlossenen Zustand des Dachflügels (5) eingekuppelt und im geöffneten Zustand des Dachflügels (5) ausgekuppelt ist.

11. Dachflügeltür nach einem der Ansprüche 8 bis 10,
**dadurch gekennzeichnet, dass**
der Drehadapter (20) und das Mitnahmestück (21) der Kupplungseinrichtung (19) formschlüssig zusammenwirken.

12. Dachflügeltür nach einem der Ansprüche 8 bis 11,
**dadurch gekennzeichnet, dass**
der Drehadapter (20) mit einem Drehantrieb versehen ist.

13. Dachflügeltür nach Anspruch 12,
**dadurch gekennzeichnet, dass**
der Drehantrieb ein Zugmittel (18) aufweist.

14. Dachflügeltür nach einem der Ansprüche 1 bis 13,
**dadurch gekennzeichnet, dass**
ein Schwingantrieb (9) für den Dachflügel (5) vorgesehen ist.

15. Dachflügeltür nach Anspruch 14,
**dadurch gekennzeichnet, dass**
der Schwingantrieb (9) außerhalb des Dachflügels (5) in dem Fahrzeugdach (7) angeordnet ist.

16. Dachflügeltür nach Anspruch 14 oder 15,
**dadurch gekennzeichnet, dass**
der Schwingantrieb (9) als elektromechanischer Schwingantrieb ausgebildet ist.

17. Dachflügeltür nach einem der Ansprüche 14 bis 16,
**dadurch gekennzeichnet, dass**
der Schwingantrieb (9) an das Scharnier (6a, 6b) gekoppelt ist.

18. Dachflügeltür nach einem der Ansprüche 1 bis 17,
**dadurch gekennzeichnet, dass**
die Seitentür (3) als rahmenlose Tür ausgebildet ist.

19. Dachflügeltür nach einem der vorherigen Ansprüche,
**dadurch gekennzeichnet, dass**
der Dachflügel (5) automatisch mittels der Arretiervorrichtung (15) am Scharnier (6a, 6b) arretiert wird, nachdem er sich eine vorgegebene Zeit in der dafür vorgesehenen Position befindet.

## Claims

1. Roof wing door (2) for a motor vehicle (1), comprising two door elements, specifically a side door (3) and an adjoining roof wing (5) which can pivot upwards and which is arranged in a vehicle roof (7), wherein at least one hinge (6a, 6b) is provided by means of which the roof wing (5) is attached in a pivotable fashion to the vehicle roof (7),
**characterized in that**
a locking device (15) is provided with which the roof wing (5) is disconnectably attached to the hinge (6a, 6b).

2. Roof wing door according to Claim 1,
**characterized in that**
the locking device (15) has a manual closure (22) which is provided directly on the roof wing (5) and has the purpose of disconnecting and securing the connection between the hinge (6a, 6b) and the roof wing (5).

3. Roof wing door according to Claim 1 or 2,
**characterized in that**
the locking device (15) has a switchable automatic closure for disconnecting and securing the connection between the hinge (6a, 6b) and roof wing (5).

4. Roof wing door according to Claim 3,
**characterized in that**
the automatic closure has a locking element (16) and a drive device for the locking element (16), wherein the locking element (16) and the drive device are disconnected from one another in the opened state of the roof wing (5).

5. Roof wing door according to Claim 4,
**characterized in that**
the locking element is arranged on the hinge (6a, 6b) both in the mounted state and in the disconnected state of the roof wing (5) and can pivot with said hinge (6a, 6b).

6. Roof wing door according to one of Claims 3 to 5,
**characterized in that**
the locking element (16) of the automatic closure can be activated by means of a rotational movement.

7. Roof wing door according to one of Claims 4 to 6,
**characterized in that**
the automatic closure has a coupling device (19) by means of which the locking element (16) can be coupled to the drive device.

8. Roof wing door according to Claim 7,
**characterized in that**
the coupling device (19) has two coupling components which can be moved towards one another and away from one another, wherein the coupling components can be coupled by moving towards one another.

9. Roof wing door according to Claim 8,
**characterized in that**
one coupling component is embodied as a rotational adapter (20) and the second coupling component is embodied as a driver element (21), wherein the rotational adapter (20) is arranged in a fixed fashion in relation to the vehicle roof (7), and the driver element (21) is arranged in a rotationally fixed fashion on the locking element (16) and can pivot with it.

10. Roof wing door according to Claim 9,
**characterized in that**
the rotational adapter (20) and the driver element (21) can be coupled and decoupled by opening and closing the roof wing (5), wherein the coupling device (19) is coupled in the closed state of the roof wing (5) and decoupled in the opened state of the roof wing (5).

11. Roof wing door according to one of Claims 8 to 10,
**characterized in that**
the rotational adapter (20) and the driver element (21) of the coupling device (19) interact in a positively locking fashion.

12. Roof wing door according to one of Claims 8 to 11,
**characterized in that**
the rotational adapter (20) is provided with a rotational drive.

13. Roof wing door according to Claim 12,
**characterized in that**
the rotational drive has a pulling means (18).

14. Roof wing door according to one of Claims 1 to 13,
**characterized in that**
a pivoting drive (9) is provided for the roof wing (5).

15. Roof wing door according to Claim 14,
**characterized in that**
the pivoting drive (9) is arranged outside the roof wing (5) in the vehicle roof (7) .

16. Roof wing door according to Claim 14 or 15,
**characterized in that**
the pivoting drive (9) is embodied as an electromechanical pivoting drive.

17. Roof wing door according to one of Claims 14 to 16,
**characterized in that**
the pivoting drive (9) is coupled to the hinge (6a, 6b).

18. Roof wing door according to one of Claims 1 to 17,
**characterized in that**
the side door (3) is embodied as a frameless door.

19. Roof wing door according to one of the preceding claims,
**characterized in that**
the roof wing (5) is locked automatically to the hinge (6a, 6b) by means of the locking device (15) after said roof wing (5) has been for a predefined time in the position provided for it.

## Revendications

1. Porte à panneau pivotant de toit (2) pour un véhicule automobile (1), comprenant deux éléments de porte, à savoir une porte latérale (3) ainsi qu'un panneau de toit (5) adjacent pouvant s'ouvrir par pivotement, qui est disposé dans un toit (7) du véhicule, au moins une charnière (6a, 6b) au moyen de laquelle le panneau de toit (5) est monté de manière pivotante sur le toit (7) du véhicule est prévue,
**caractérisée en ce que**
l'on prévoit un dispositif de blocage (15) avec lequel le panneau de toit (5) est monté de manière amovible sur la charnière (6a, 6b).

2. Porte à panneau pivotant de toit selon la revendication 1,
**caractérisée en ce que**
le dispositif de blocage (15) présente une fermeture manuelle (22) prévue directement sur le panneau de toit (5), pour desserrer et fixer la connexion entre la charnière (6a, 6b) et le panneau de toit (5).

3. Porte à panneau pivotant de toit selon la revendication 1 ou 2,
**caractérisée en ce que**
le dispositif de blocage (15) présente une fermeture automatique commutable pour desserrer et fixer la connexion entre la charnière (6a, 6b) et le panneau de toit (5).

4. Porte à panneau pivotant de toit selon la revendication 3,
**caractérisée en ce que**
la fermeture automatique présente un élément de blocage (16) ainsi qu'un dispositif d'entraînement pour l'élément de blocage (16), l'élément de blocage (16) et le dispositif d'entraînement étant desserrés l'un de l'autre dans l'état ouvert du panneau de toit (5).

5. Porte à panneau pivotant de toit selon la revendication 4,
**caractérisée en ce que**
l'élément de blocage est disposé sur la charnière (6a, 6b) dans l'état monté comme dans l'état desserré du panneau de toit (5) et peut pivoter avec elle.

6. Porte à panneau pivotant de toit selon l'une quelconque des revendications 3 à 5,
**caractérisée en ce que**
l'élément de blocage (16) de la fermeture automatique peut être actionné par un mouvement de rotation.

7. Porte à panneau pivotant de toit selon l'une quelconque des revendications 4 à 6,
**caractérisée en ce que**
la fermeture automatique présente un dispositif d'accouplement (19) par le biais duquel l'élément de blocage (16) peut être accouplé au dispositif d'entraînement.

8. Porte à panneau pivotant de toit selon la revendication 7,
**caractérisée en ce que**
le dispositif d'accouplement (19) présente deux parties d'accouplement qui peuvent être rapprochées et écartées l'une de l'autre, les parties d'accouplement pouvant être accouplées l'une à l'autre par déplacement l'une vers l'autre.

9. Porte à panneau pivotant de toit selon la revendication 8,
**caractérisée en ce**
**qu'**une partie d'accouplement est réalisée sous forme d'adaptateur rotatif (20) et la deuxième partie d'accouplement est réalisée sous forme de pièce d'entraînement (21), l'adaptateur rotatif (20) étant disposé de manière stationnaire par rapport au toit (7) du véhicule, et la pièce d'entraînement (21) étant disposée de manière solidaire en rotation sur l'élément de blocage (16) et pouvant pivoter avec lui.

10. Porte à panneau pivotant de toit selon la revendication 9,
**caractérisée en ce que**
l'adaptateur rotatif (20) et la pièce d'entraînement (21) peuvent être accouplés et désaccouplés par l'ouverture et la fermeture du panneau de toit (5), le dispositif d'accouplement (19) étant accouplé dans l'état fermé du panneau de toit (5) et étant désaccouplé dans l'état ouvert du panneau de toit (5).

11. Porte à panneau pivotant de toit selon l'une quelconque des revendications 8 à 10,
**caractérisée en ce que**
l'adaptateur rotatif (20) et la pièce d'entraînement (21) du dispositif d'accouplement (19) coopèrent par engagement par coopération de forme.

12. Porte à panneau pivotant de toit selon l'une quelconque des revendications 8 à 11,
**caractérisée en ce que**
l'adaptateur rotatif (20) est pourvu d'un entraînement en rotation.

13. Porte à panneau pivotant de toit selon la revendication 12,
**caractérisée en ce que**
l'entraînement en rotation présente un moyen de traction (18).

14. Porte à panneau pivotant de toit selon l'une quelconque des revendications 1 à 13,
**caractérisée en ce que**
l'on prévoit un entraînement oscillant (9) pour le panneau de toit (5).

15. Porte à panneau pivotant de toit selon la revendication 14,
**caractérisée en ce que**
l'entraînement oscillant (9) est disposé en dehors du panneau de toit (5) dans le toit (7) du véhicule.

16. Porte à panneau pivotant de toit selon la revendication 14 ou 15,
**caractérisée en ce que**
l'entraînement oscillant (9) est réalisé sous forme d'entraînement oscillant électromécanique.

17. Porte à panneau pivotant de toit selon l'une quelconque des revendications 14 à 16,
**caractérisée en ce que**
l'entraînement oscillant (9) est accouplé à la charnière (6a, 6b).

18. Porte à panneau pivotant de toit selon l'une quelconque des revendications 1 à 17,
**caractérisée en ce que**
la porte latérale (3) est réalisé sous forme de porte sans cadre.

19. Porte à panneau pivotant de toit selon l'une quelconque des revendications précédentes,
**caractérisée en ce que**
le panneau de toit (5) est bloqué automatiquement au moyen du dispositif de blocage (15) sur la charnière (6a, 6b), après qu'il soit resté pendant un temps prédéterminé dans la position prévue à cet effet.
